**Europäisches Patentamt**

**European Patent Office**

**Office européen des brevets**

(19)

(11) Veröffentlichungsnummer : **0 365 624 B1**

(12) ## EUROPÄISCHE PATENTSCHRIFT

(45) Veröffentlichungstag der Patentschrift :
**11.11.92 Patentblatt 92/46**

(51) Int. Cl.$^5$ : **G01N 21/31**

(21) Anmeldenummer : **89903738.6**

(22) Anmeldetag : **13.03.89**

(86) Internationale Anmeldenummer :
**PCT/EP89/00258**

(87) Internationale Veröffentlichungsnummer :
**WO 89/08831 21.09.89 Gazette 89/23**

(54) **ATOMABSORPTIONS-SPEKTROMETER.**

(30) Priorität : **18.03.88 DE 3809216**

(43) Veröffentlichungstag der Anmeldung :
**02.05.90 Patentblatt 90/18**

(45) Bekanntmachung des Hinweises auf die
Patenterteilung :
**11.11.92 Patentblatt 92/46**

(84) Benannte Vertragsstaaten :
**AT BE CH DE FR GB IT LI LU NL SE**

(56) Entgegenhaltungen :
**EP-A- 0 095 549**
**WO-A-88/06280**
**DE-A- 2 630 607**
**DE-A- 2 950 105**
**DE-A-35 283 00**
**DE-B- 1 146 278**
**ANALYTICAL CHEMISTRY, vol. 52, no 8., Juli
1980 (Columbus, US); P.R.LIDDELL et al.:
"Application of a Modulated MagneticField to
a Graphite Furnace in Zeeman Effect Atomic
Absorption Spectrometry", Seiten 1256-1260**

(73) Patentinhaber : **BODENSEEWERK
PERKIN-ELMER GMBH
Alte Nussdorfer Strasse 15
W-7770 Uberlingen/Bodensee (DE)**

(72) Erfinder : **DENCKS, Carl, Günther
Prielstrasse 3
W-7776 Owingen (DE)**
Erfinder : **ROEDEL, Günther
Hinter den Gärten 13
W-7776 Owingen (DE)**
Erfinder : **ROGASCH, Klaus, Peter
Th-Hofmannweg 3
W-7772 Uhldingen-Mühlhofen 1 (DE)**

(74) Vertreter : **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg (DE)**

EP 0 365 624 B1

## Beschreibung

### Technisches Gebiet

Die Erfindung betrifft ein Atomabsorptions - Spektrometer enthaltend

(a) eine Atomisierungsvorrichtung zur Atomisierung einer zu untersuchenden Probe, derart, daß die Atome der in der Probe enthaltenen Elemente in einem Atomisierungsbereich in atomarem Zustand vorliegen,

(b) eine linienemittierende Lichtquelle,

(c) ein optisches System zur Erzeugung eines von der linienemittierenden Lichtquelle ausgehenden, den Atomisierungsbereich durchsetzenden Meßlichtbündels,

(d) und einen photoelektrischen Detektor, auf welchen das Meßlichtbündel von dem optischen System nach Durchtritt durch den Atomisierungsbereich geleitet wird.

(e) die Lichtquelle, das optische System und der photoelektrische Detektor in einem Gehäuse angeordnet sind, welches einen nach vorn offenen Probenraum bildet, der von dem Meßlichtbündel durchsetzt wird, und in welchen wahlweise unterschiedliche Atomisierungsvorrichtungen einsetzbar sind.

Atomabsorptions - Spektrometer dienen zur Bestimmung der Menge oder Konzentration eines gesuchten Elementes in einer Probe. Zu diesem Zweck wird von einer linienemittierenden Lichtquelle, beispielsweise einer Hohlkathodenlampe, ein Meßlichtbündel auf einen photoelektrischen Detektor geleitet. Im Strahlengang dieses Meßlichtbündels ist eine Atomisierungsvorrichtung angeordnet. In dieser Atomisierungsvorrichtung wird die zu untersuchende Probe atomisiert, so daß ihre Bestandteile in atomarem Zustand vorliegen. Das Meßlichtbündel enthält die Resonanzlinien des gesuchten Elements. Diese Resonanzlinien des Meßlichtbündels werden von den Atomen des gesuchten Elements in der Atomwolke absorbiert, während im Idealfall die anderen in der Probe enthaltenen Elemente das Meßlichtbündel nicht beeinflußen. Das Meßlichtbündel erfährt daher eine Schwächung, die ein Maß für die Anzahl der im Weg des Meßlichtbündels befindlichen Atome des gesuchten Elements und damit je nach dem angewandten Atomisierungsverfahren ein Maß für die Konzentration oder die Menge des gesuchten Elementes in der Probe darstellt. Die Absorption, die das Meßlichtbündel erfährt, wird aber nicht nur durch die Atome des gesuchten Elements hervorgerufen. Es gibt eine "Untergrundabsorption", beispielsweise infolde der Absorption des Lichts durch Moleküle. Diese Untergrundabsorption muß insbesondere bei hochempfindlichen Messungen kompensiert werden.

Als Atomisierungsvorrichtung kann eine Flamme dienen, in welche eine Probe als Lösung eingesprüht wird. Für hochempfindliche Messungen verwendet man aber vorzugsweise die elektrothermische Atomisierung: Die Probe wird in einen Ofen eingebracht, der durch Hindurchleiten von elektrischem Strom auf eine hohe Temperatur aufgeheizt wird. Dadurch wird die Probe in dem Ofen zunächst getrocknet, dann verascht und schließlich atomisiert. In dem Ofen bildet sich dann eine "Atomwolke" aus, in welcher das gesuchte Element in atomarer Form vorliegt. Das Meßlichtbündel wird durch diesen Ofen hindurchgeleitet.

Zur Untergrundkompensation wird der "Zeeman - Effekt" ausgenutzt. Wenn an die absorbierenden Atome in der atomisierten Probe ein Magnetfeld angelegt wird, dann erfolgt eine Aufspaltung und Verschiebung der Resonanzlinien dieser Atome. Die Resonanzlinien der Atome fallen dann ncht mehr mit den Spektrallinien des Meßlichtbündels zusammen und es erfolgt im Grenzfall keine atomare Absorption mehr. Dadurch kann zwischen nicht - atomarer Untergrundabsorption, die auch bei anliegendem Magnetfeld auftritt, und echter Atomabsorption, die bei nichtanliegendem Magnetfeld der Untergrundabsorption überlagert ist, unterschieden werden.

Die Erfindung bezieht sich auf eine vorteilhafte Konstruktion eines solchen Atomabsorptions-Spektrometers.

### Zugrundeliegender Stand der Technik

Durch die DE-AS 1 964 469 ist ein Atomabsorptions - Spektrometer bekannt, bei welchem die Strahlung von einer einzigen, als Linienstrahler ausgebildeten Strahlungsquelle ausgeht, deren durch die Probe tretende Strahlung unter Ausnutzung des longitudinalen Zeeman - Effektes frequenzmoduliert wird. Bei diesem bekannten Atomabsorptions - Spektrometer sitzt eine Hohlkathodenlampe zwischen den Polschuhen eines Elektromagneten. Einer der Polschuhe weist eine Bohrung auf, durch welche das Meßlichtbündel hindurchtritt. Das Meßlichtbündel tritt dann durch eine als Atomisierungsvorrichtung dienende Flamme und einen Monochromator und fällt auf einen photoelektrischen Detektor. Der Elektromagnet ist ein- und ausschaltbar, wobei aus der Differenz der Signale bei aus und eingeschaltetem Elektromagneten die atomare, hinsichtlich der Untergrundabsorption kompensierte Absorption der Probenatome bestimmt werden kann.

Durch die DE-PS 2 165 106 ist es bekannt, das Magnetfeld eines ein- und ausschaltbaren Elektromagneten statt an die Lichtquelle an die Atomisierungsvorrichtung anzulegen, also an die atomisierte Probe. Die Atomisierungsvorrichtung ist dabei eine Flamme. Das Magnetfeld wird senkrecht zur Laufrichtung des Meßlichtbündels angelegt. Es erfolgt hier eine Aufspaltung der Absorptionslinien infolge des "transversalen" Zeeman - Effektes, was wiederum eine Relativverschiebung der Emissionslinien des Meßlichtbündels und der Absorptionslinien der Probe bewirkt. Durch Ein- und Auschalten des Magnetfeldes kann wieder zwischen atomarer Absorption durch die Atome des gesuchten Elements und unspezifischer Untergrundabsorption unterschieden werden.

Durch die DE-PS 29 50 105 ist ein Atomabsorptions - Spektrometer bekannt, bei welchem von einem Gehäuse ein Probenraum gebildet wird, der von einem Meßstrahlenbündel durchsetzt ist. In dem Probenraum ist eine Atomisierungsvorrichtung angeordnet. Als Atomisierungsvorrichtung kann wahlweise eine Meßküvette, in welcher durch chemische Reaktionen aus einer Probe gebildete Hydride zersetzt werden, ein Brenner oder ein Ofen zur elektrothermischen Atomisierung ("Graphitrohrküvette") vorgesehen werden.

Die DE-PS 29 50 105 beschreibt zum Stand der Technik eine Konstruktion, bei welcher je nach der gewünschten Art der Atomisierung die geeignete Atomisierungsvorrichtung in den Probenraum einzeln eingebaut und im Probenraum justiert wird. Nach Einbau und Justage müssen Anschlüsse für die Zufuhr von Strom, Schutzgas und Kühlflüssigkeit oder für Brenngas und Oxidans installiert werden.

Die DE-PS 29 50 105 beschreibt demgegenüber ein Atomabsorptions - Spektrometer, bei welchem wenigstens zwei der vorgenannten Atomisierungsvorrichtungen, HydridMeßküvette, Brenner oder Ofen zu einer fest im Probenraum installierten Baugruppe vereinigt sind. Das Meßstrahlenbündel ist wahlweise durch eine jeweils in Betrieb befindliche Atomisierungsvorrichtung hindurchleitbar.

Bei der DE-PS 29 50 105 geht es nur um die Installation der Atomisierungsvorrichtungen im engeren Sinne, also etwa des Brenners oder des Ofens. Zu jeder Betriebsweise gehören jedoch noch Zusatzgeräte. Zu einem Brenner gehören beispielsweise Steuereinrichtungen zum Steuern oder Regeln der Brenngas- und Oxidanszufuhr. Zu einem Ofen für die elektrothermische Atomisierung gehört ein Netzteil, welches die erforderlichen hohen und einstellbaren Ströme liefert. Diese Zusatzgeräte sind üblicherweise als getrennte Baugruppen ausgebildet, die neben dem Atomabsorptions - Spektrometer angeordnet und im allgemeinen recht unhandlich sind.

Bei dem Atomabsorptions - Spektrometer nach der vorstehend diskutierten DE-PS 29 50 105 sind alle wahlweise verwendbaren Atomisierungsvorrichtungen permanent im Gerät installiert. Auch die Signalverarbeitung muß für die verschiedenen Arten der Atomisierung vorgesehen sein. Dadurch wird das Atomabsorptions - Spektrometer unhandlich und aufwendig.

Durch die DE-PS 35 28 300 ist ein Atomabsorptions - Spektrometer mit einem Brenner bekannt, bei welchem der Brenner justierbar auf einem Schlitten angeordnet ist. Der Schlitten ist durch einen Stellmotor zwischen einer ersten und einer zweiten Stellung beweglich. In einer ersten Stellung wird die Atomwolke durch den Brenner im Bereich des stationär verlaufenden Meßlichtbündels gebildet. In der zweiten Stellung ist der Brenner mit seiner Flamme außerhalb des stationär verlaufenden Meßlichtbündels angeordnet, so daß eine von der atomisierten Probe unbeeinflußte Messung erfolgt. Es geht hier um die Kompensation der Nulliniendrift.

Es ist weiter ein Atomabsorptions - Spektrometer bekannt, bei welchem eine Kompensation der Untergrundabsorption dadurch ermöglicht wird, daß am Ort der Probe in einem Ofen für die elektrothermische Atomisierung periodisch ein starkes Magnetfeld erzeugt wird und die Absorptionslinien der Probe durch den Zeeman - Effekt gegenüber den Linien des Meßlichtbündels verschoben werden. Bei diesem bekannten Atomabsorptions - Spektrometer wird ein für den Betrieb ohne "Zeeman - Effekt" eingerichtetes Atomabsorptions - Spektrometer als Grundgerät benutzt. An dieses Grundgerät wird ein "Zeeman - Zusatz" angesetzt, der in einem gesonderten Probenraum einen Ofen und einen Magneten zur Erzeugung des Zeeman - Effektes enthält.

Die WO-A-88/06280 (Stand der Technik nach Artikel 54 (3) EPÜ) beschreibt ein Atomabsorptions-Spektrometer, bei welchem das Gerät aus drei Modulen besteht, nämlich aus einem optischen Modul mit einem Lampenträger, einem Monochromator, den Stromversorgungen und Mikroprozessorsteuerungen, aus einem "Atomsource"-Atomisierer und aus einem Rechner.

**Offenbarung der Erfindung**

Der Erfindung liegt die Aufgabe zugrunde, ein Atomabsorptions - Spektrometer so aufzubauen, daß in der Fertigung mit einheitlichen Baugruppen wahlweise Spektrometer für unterschiedliche Atomisierungsvorrichtungen aufgebaut werden können.

Der Erfindung liegt weiter die Aufgabe zugrunde, dem Benutzer auf einfache Weise eine Nachrüstung eines Atomabsorptions - Spektrometers für die Verwendung mit anderen Atomisierungsvorrichtungen zu ermöglichen.

Schließlich soll der Benutzer auf einfache Weise zwischen verschiedenen Atomisierungsvorrichtungen wählen können.

Erfindungsgemäß werden die gestellten Aufgaben dadurch gelöst, daß

(f) das Atomabsorptionsgerät ein Grundgerät umfaßt, dessen Gehäuse eine Grundplatte und im Abstand oberhalb dieser Grundplatte eine Trägerplatte aufweist,

(g) auf der Trägerplatte die Lichtquelle, das optische System und der photoelektrische Detektor montiert sind,

(h) die Trägerplatte an der Vorderseite einen Ausschnitt aufweist,

(i) das Gehäuse im Bereich des Ausschnitts den nach vorn offenen Probenraum bildet,

(j) an den Probenraum sich in dem Gehäuse unterhalb der Trägerplatte ein Hohlraum anschließt,

(k) auf der Trägerplatte beiderseits des Ausschnitts optische Glieder angeordnet sind, durch welche das Meßlichtbündel durch den Probenraum hindurchleitbar ist,

(l) eine von dem Grundgerät getrennte Einschubbaugruppe mit einer Einschubplatte vorgesehen ist, welche eine Atomisierungsvorrichtung und für den Betrieb und/oder die Signalverarbeitung dieser Atomisierungsvorrichtung spezifische Bauteile trägt und welche in den Probenraum und den Hohlraum in definierter Lage austauschbasr so gehaltert, daß die Atomisierungsvorrichtung richtig zu dem Meßlichtbündel ausgerichtet ist, wobei die in der Einschubbaugruppe enthaltenen Bauteile zusammen mit den Bauteilen des Grundgerätes ein voll funktionsfähiges Atomabsorptions-Spektrometer ergeben.

Nach der Erfindung besteht somit das Atomabsorptions - Spektrometer aus einem Grundgerät, das die Lichtquelle, das optische System und den Detektor enthält. Die Atomisierungsvorrichtung und die für die Atomisierungsvorrichtung spezifischen Bauteile sind in einer Einschubbaugruppe zusammengefaßt, die in definierter Lage in das Grundgerät eingesetzt werden kann. Die für die Atomisierungsvorrichtung spezifischen Bauteile umfassen im Falle eines Ofens für die elektrothermische Atomisierung ein Netzteil, bei Messung der Untergrundabsorption mittels des Zeeman - Effektes zusätzlich einen Elektromagneten und das Netzteil und die Steuerung für diesen Magneten sowie ggf. eine Signalverarbeitungsschaltung für die Kompensation der Untergrundabsorption. Wenn die Atomisierungsvorrichtung ein Brenner ist, dann umfassen die dafür spezifischen Bauteile z.B. die Steuer- oder Regelvorrichtungen für Brenngas und Oxidans sowie die Zündvorrichtung für die Flamme und einen Flammenwächter. Es ergibt sich in jedem Fall ein kompakter Aufbau, da die für jede Atomisierungsvorrichtung erforderlichen spezifischen Bauteile (Hilfsgeräte) mit der eigentlichen Atomisierungsvorrichtung zu einer Einschubbaugruppe integriert sind. Die Einschubbaugruppe sitzt in genau definierter Lage in dem Probenraum des Grundgerätes. Die Atomisierungsvorrichtung, also Brenner oder Ofen, sind wiederum genau zu der Einschubbaugruppe justiert. Der Wechsel von einer Art von Atomisierungsvorrichtung zur anderen kann daher problemlos und ohne aufwendige Justierarbeiten bewerkstelligt werden. Für die Fertigung ergibt sich der Vorteil, daß einheitliche Baugruppen hergestellt werden, die zur Herstellung eines gewünschten Typs von Atomabsorptions - Spektrometer, beispielsweise eines Flammengerätes zusammengesetzt werden können. Der Benutzer kann ein Gerät jederzeit durch eine entsprechende Einschubbaugruppe für eine andere Art von Atomisierungsvorrichtung nachrüsten. In der Ursprungsversion braucht dazu das Atomabsorptions - Spektrometer nicht mehr Einrichtungen aufzuweisen, als für die Funktion der Ursprungsversion erforderlich waren. Die Einschubbaugruppe ist dabei unabhängig von der das optische System tragenden Trägerplatte. Die Justage des optischen Systems wird daher durch das Einsetzen oder Austauschen von Einschubbaugruppen nicht beeinflußt.

Im Gegensatz zu den oben diskutierten konventionellen Atomabsorptions - Spektrometern, bei denen die Atomisierungsvorrichtungen einzeln in einem Probenraum montierbar sind, sind bei dem erfindungsgemäßen Atomabsorptions - Spektrometer die Atomisierungsvorrichtungen mit den zugehörigen dafür spezifischen Bauteilen in einer Einschubbaugruppe integriert und relativ zu dieser justiert.

Im Gegensatz zu der Anordnung nach der DE-PS 29 50 105 sind nicht mehrere Atomisierungsvorrichtungen permanent in dem Atomabsorptions - Spektrometer vorgesehen.

Im Gegensatz zu dem oben diskutierten bekannten "Zeeman" - Atomabsorptions - Spektrometer ist kein Zusatzgerät mit getrenntem Probenraum erforderlich. Vielmehr kann auch eine mit Kompensation der Untergrundabsorption durch den Zeeman - Effekt arbeitende Atomisierungsvorrichtung in den vorbereiteten Probenraum eingesetzt werden.

Im Gegensatz zu allen vorstehend diskutierten bekannten Atomabsorptions - Spektrometern sind bei der Erfindung die Hilfsgeräte in der Einschubbaugruppe integriert.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

**Kurze Beschreibung der Zeichnungen**

Fig.1 ist eine schematische Darstellung und zeigt den Aufbau des Grundgerätes eines Atomabsorptions - Spektrometers.

Fig.2 zeigt eine Vorderansicht des Grundgerätes.

Fig.3 ist eine perspektivische Darstellung des Grundgerätes, wobei die Abdeckung des Optikteils abgenommen ist.

Fig.4 ist eine Vorderansicht eines Atomabsorptions - Spektrometers, bei welchem die Atomisierungsvorrichtung von einem Brenner gebildet ist.

Fig.5 zeigt eine Draufsicht auf eine Einschubbaugruppe mit Brenner und "Gasbox",

Fig.6 ist eine perspektivische Darstellung des Grundgerätes mit der den Brenner und die Gasbox enthaltenden Einschubbaugruppe, wobei die Einschubbaugruppe teilweise herausgezogen dargestellt ist.

Fig.7 ist eine Vorderansicht eines Atomabsorptions - Spektrometers, bei welchem die Atomisierungsvorrichtung von einem Ofen zur elektrothermischen Atomisierung der Probe gebildet ist.

Fig.8 ist eine Draufsicht der Einschubbaugruppe mit Ofen und den zugehörigen Elektronik- und Pneumatikbaugruppen.

Fig.9 ist eine schematische Darstellung und zeigt eine Einschubbaugruppe mit einem Ofen zur elektrothermischen Atomisierung der Probe und einem Elektromagneten, durch welchen an den Probenatomen eine Verschiebung der Absorptionslinien durch den Zeeman - Effekt hervorgerufen werden kann.

Fig.10 ist eine perspektivische Darstellung und zeigt das Grundgerät und die "Zeeman" - Einschubbaugruppe, wobei die Einschubbaugruppe teilweise herausgezogen ist.

Fig.11 zeigt eine besonders vorteilhafte Ausbildung der "Zeeman" - Anordnung, welche eine besonders kompakte Bauweise des Elektromagneten und dadurch die Ausbildung als Einschubbaugruppe begünstigt.

Fig.12 zeigt einen Schnitt längs der Linie XII - XII von Fig.11.

Fig.13 ist ein Blockschaltbild und zeigt die Steuerung des Stromes durch den Elektromagneten bei der Einschubbaugruppe von Fig.9 und 10

## Bevorzugte Ausführung der Erfindung

Das Atomabsorptions - Spektrometer weist ein Gehäuse 10 auf, in welchem die Lampen, das optische System und der photoempfindliche Detektor angeordnet sind. Das Gehäuse 10 bildet einen Probenraum 12.

Das Atomabsorptions - Spektrometer weist als eine erste Lichtquelle 16 eine Hohlkathodenlampe auf. Die Lichtquelle emittiert ein Linienspektrum, das den Resonanzlinien eines bestimmten, gesuchten Elements entspricht. Von der Lichtquelle 16 geht ein Meßlichtbündel 18 aus. Das Meßlichtbündel 18 wird von einem Planspiegel 20 umgelenkt und von einem Hohlspiegel 22 durch eine Öffnung 24 des Gehäuses hindurch in der Mitte des Probenraumes gesammelt. Das Meßlichtbündel tritt dann durch eine mit der Öffnung 24 fluchtende Öffnung 26 des Gehäuses 10 und fällt auf einen zweiten Hohlspiegel 28. Von dem zweiten Hohlspiegel 28 wird das Meßlichtbündel 18 über einen Planspiegel 30 auf dem Eintrittsspalt 32 eines Monochromators 34 fokussiert. Hinter einem Austrittsspalt 36 des Monochromators 34 sitzt ein photoelektrischer Detektor 38. Das Signal des photoelektrischen Detektors beaufschlagt eine Signalverarbeitungs - Schaltung 40.

In dem Gehäuse sitzt eine zweite Lichtquelle 42, die ein Kontinuum emittiert. Diese zweite Lichtquelle ist eine Deuteriumlampe. Die zweite Lichtquelle 42 sendet ein Lichtbündel 44 aus. Dieses Lichtbündel 44 von der zweiten Lichtquelle 42 kann über einen in den Strahlengang wahlweise einschaltbaren Strahlenteiler 46 in den Strahlengang des Meßlichtbündels 18 eingeschwenkt werden. Die erste und die zweite Lichtquelle 16 bzw. 42 können in schneller Folge abwechselnd eingeschaltet werden, so daß abwechselnd ein Meßlichtbündel 18 mit einem Linienspektrum von der ersten Lichtquelle (Hohlkathodenlampe) 16 oder ein Meßlichtbündel mit einem Kontinuum von der zweiten Lichtquelle (Deuteriumlampe) 42 durch den Probenraum 12 tritt.

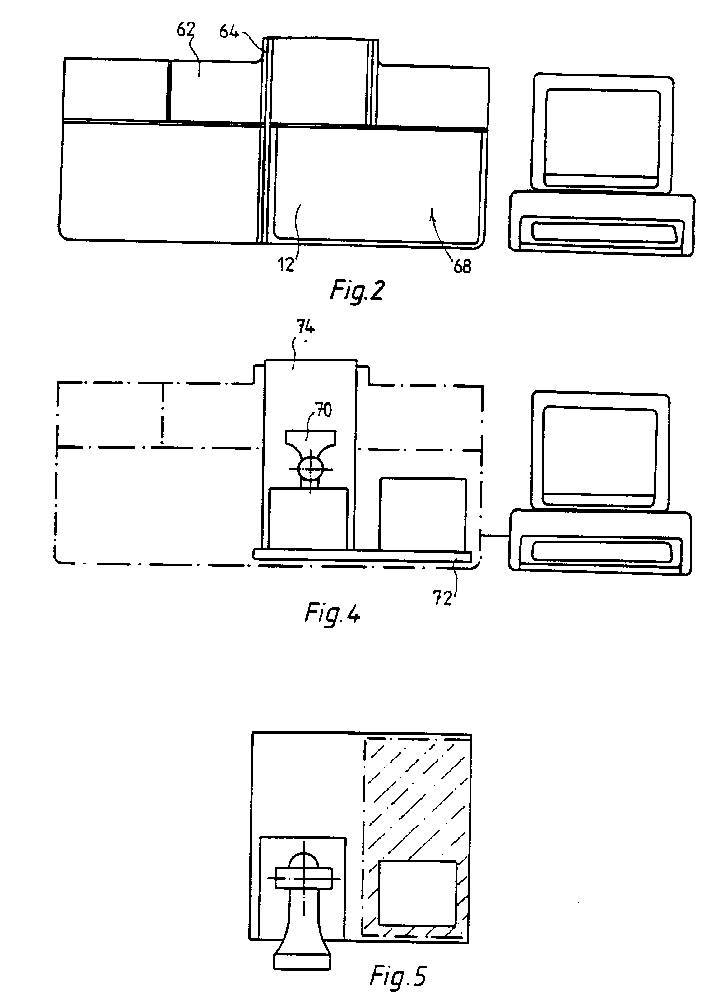

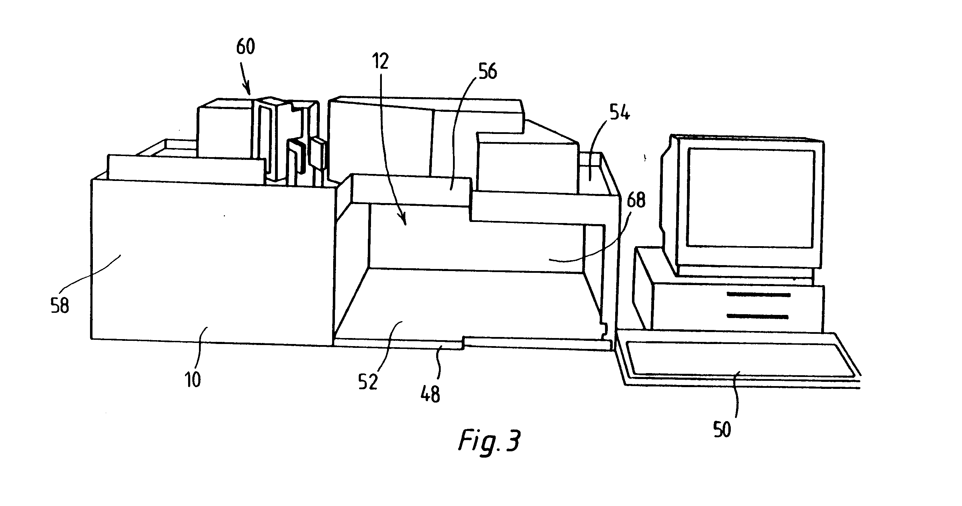

Fig.2 und 3 zeigen den räumlichen Aufbau des Grundgerätes 48, das mit einem Rechner 50 verbunden ist. Das Gehäuse 10 des Grundgerätes 48 bildet den Probenraum 12. Das Gehäuse 10 bildet eine Grundplatte 52 und im Abstand oberhalb dieser Grundplatte 52 eine Trägerplatte 54, auf welcher die Lichtquellen, das optische System und der photoelektrische Detektor montiert sind. Die Trägerplatte 54 weist an der Vorderseite einen rechteckigen Ausschnitt 56 auf. Auf einer Seite dieses Ausschnitts ist in dem Gehäuse 10 eine abgeschlossene Kammer 58 gebildet, welche eine "Grundelektronik" enthält, welche für alle mit dem Grundgerät benutzbaren Atomisierungsvorrichtungen gemeinsam ist. Die auf der Trägerplatte 54 montierten Bauteile, die generell mit 60 bezeichnet sind, sind durch eine Haube 62 abgedeckt. Diese Haube 62 bildet um den Ausschnitt 56 herum einen hochstehenden Rand 64, läßt aber zu dem optischen System hin die Durchtrittsöffnungen 24 und 26 frei. Es wird so unterhalb des Ausschnitts 56 und oberhalb der Grundplatte 52 der nach vorn offene Probenraum 12 gebildet. Der Probenraum bildet eine rechteckige Vertiefung des Gehäuses 10. Beiderseits dieser Vertiefung sind optische Glieder des optischen Systems angeordnet. Nach der in Fig.3 linken Seite hin ist der Probenraum 12 unterhalb der Trägerplatte 54 durch eine Trennwand 66 begrenzt, welche die Kammer 58 abschließt. Nach hinten und nach rechts in Fig.3 schließt sich an den Probenraum ein Hohlraum 68 an.

In den Probenraum 12 und den Hohlraum 68 sind Einschubbaugruppen in definierter Lage einsetzbar. Diese Einschubbaugruppen enthalten, wieder in definierter Lage, jeweils eine Atomisierungsvorrichtung und die für diese Atomisierungsvorrichtung spezifischen Bauteile, wie noch erläutert werden wird. Nach Einsetzen der Einschubbaugruppe in den Probenraum 12 und Hohlraum 68 ist die jeweilige Atomisierungsvorrichtung richtig zu dem Meßlichtbündel ausgerichtet. Mit der eingesetzten Einschubbaugruppe ist das Atomabsorptions - Spektrometer für den Betrieb mit der jeweiligen Atomisierungsvorrichtung voll funktionsfähig.

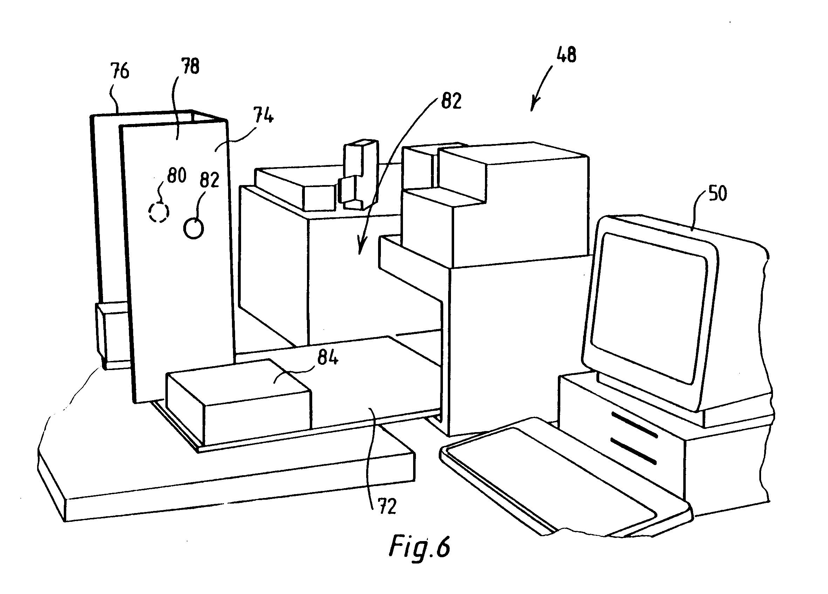

Die Figuren 4 und 6 zeigen ein Atomabsorptions - Spektrometer, bei welchem als Atomisierungsvorrichtung ein Brenner 70 vorgesehen ist. Der Brenner 70 sitzt auf einer Einschubplatte 72. Der Brenner 72 ist von einem nach vorn und nach oben offenen Schutzgehäuse 74 umgeben. Das Schutzgehäuse 47 ist quaderförmig und auf einer Längsfläche nach vorn hin und auf einer Stirnfläche nach oben hin offen. In den an die offene, vorderen Längsfläche angrenzenden Längsflächen 76 und 78 sind fluchtende Durchbrüche 80 bzw. 82 vorgesehen. Durch diese Durchbrüche tritt das Meßlichtbündel 18 hindurch, wenn die Einschubbaugruppe in den Probenraum 12 eingesetzt ist. Auf der Einschubplatte 72 ist ferner eine Steuer- und Regelvorrichtung 84 für die Zufuhr von Brenngas und Oxidans zu dem Brenner 70 vorgesehen. Auf der Einschubplatte 72 ist außerdem Raum für weitere spezifisch für den Betrieb mit Brenner vorgesehene Bauteile, insbesondere die zugehörige Elektronik vorgesehen. Diese Bauteile sind in Fig.4, 5 und 6 der Übersichtlichkeit der Darstellung halber nicht gezeigt.

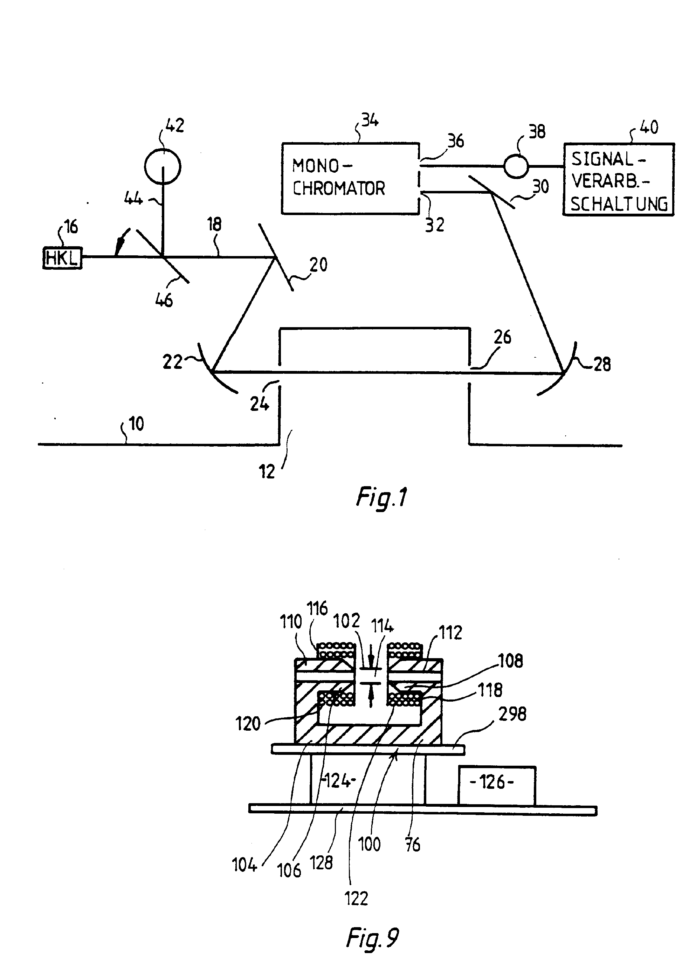

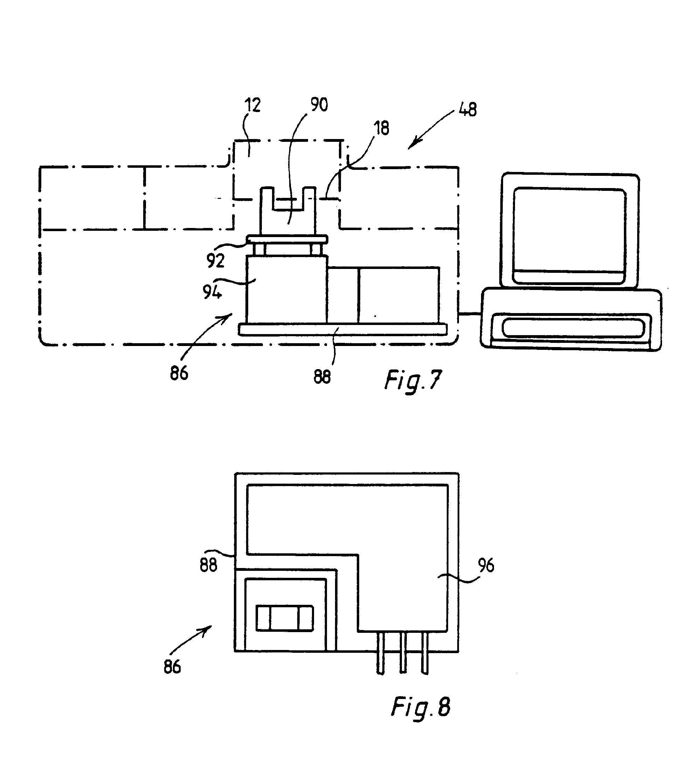

Fig.7 zeigt das Grundgerät 48 mit einer Einschubbaugruppe 86 mit einem Ofen zur elektrothermischen Atomisierung der Probe (Graphitrohrküvette) als Atomisierungsvorrichtung. Auf einer Einschubplatte 88 sitzt der Ofen 90 auf einer justierbaren Zwischenplattform 92. Unterhalb der Zwischenplattform 92 ist ein Netzteil 94 mit einem Transformator für die Stromversorgung des Ofens angeordnet. Wie in Fig.7 dargestellt ist, ragt der Ofen in dem Probenraum 12 nach oben zwischen die optischen Glieder (Hohlspiegel 22 und 28 in Fig.1) und in den Strahlengang des Meßlichtbündels 18. Neben dem Ofen 90 und dem Netzteil 92 sind auf der Einschubplatte die übrigen für den Betrieb des Ofens speziell erforderlichen Bauteile, insbesondere die Elektronik und die pneumatischen Steuerungen angeordnet. Diese Bauteile sitzen in einem Zwischengehäuse 96.

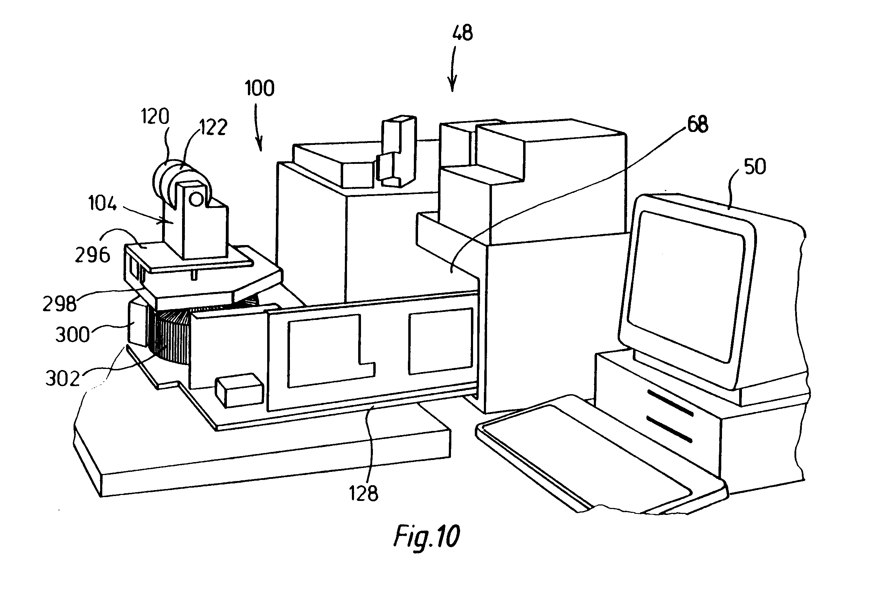

Fig.9 zeigt schematisch eine Einschubbaugruppe 100, bei welcher als Atomisierungsvorrichtung ein Ofen zur elektrothermischen Atomisierung,der Probe vorgesehen ist und zur Messung der Untergrundabsorption durch einen Elektromagneten ein Magnetfeld am Ort der Probe erzeugt werden kann, das durch den Zeeman - Effekt eine Verschiebung der Absorptionslinien gegenüber den Linien des Meßlichtbündels bewirkt.

Die Atomisierungsvorrichtung 100 enthält einen Ofen zur elektrothermischen Atomisierung, von welchem in Fig.9 nur der eigentliche Ofenkörper 102 dargestellt ist, und einen ein- und ausschaltbaren Elektromagneten 104 zur Erzeugung eines Magnetfeldes am Ort der Probe. Der Elektromagnet 104 weist zwei fluchtende Polschuhe 106 und 108 auf, zwischen denen der Ofenkörper 102 sitzt. In den Polschuhen 106 und 108 sind fluchtende Bohrungen 110 und 112 angebracht. Die Bohrungen 110 und 112 fluchten mit einer Längsbohrung 114 des Ofenkörpers 102. Das Meßlichtbündel 18 verläuft durch die Bohrungen 110 und 112 und durch die Längsbohrung 114 des Ofenkörpers 102. Auf den Polschuhen 110 und 112 sitzen Spulenhalterungen 116 bzw. 118. Auf die Spulenhalterungen 116 und 118 sind Spulen 120 bzw. 122 des Elektromagneten 104 gewickelt. Mit 124 ist ein Netzteil bezeichnet, das den Strom durch den Ofenkörper 102 steuert. Wie angedeutet, wird der Strom quer zur Laufrichtung des Meßlichtbündels 18 zugeführt und fließt in Umfangsrichtung durch den rohrförmigen Ofenkörper 102. Der Elektromagnet 104 ist von einer Magnetsteuerung 126 gesteuert, derart, daß das Magnetfeld abwechselnd ein- und ausgeschaltet wird. Das Magnetfeld des Elektromagneten 104 verläuft am Ort der Probe innerhalb des Ofenkörpers in Laufrichtung des Meßlichtbündels 18. Bei eingeschaltetem Magnetfeld wird daher an den Probenatomen der longitudinale Zeeman - Effekt erzeugt. Das bedeutet, daß die Absorptionslinien der Probenatome in jeweils zwei Linien aufgespalten werden, die gegenüber der ungestörten ursprünglichen Absorptionslinie verschoben sind. Bei der Wellenlänge der ursprünglichen -Absorptionslinie erfolgt keine atomare Absorption in der Probe mehr. Daher absorbieren auch die Atome des gesuchten Elements das Meßlichtbündel 18 nicht mehr, da dieses Meßlichtbündel nur die unverschobenen für das Element charakteristischen Resonanzlinien enthält. Bei eingeschaltetem Magnetfeld wird daher nur die Untergrundabsorption gemessen. Aus den Messungen bei ein- und ausgeschaltetem Magnetfeld kann der hinsichtlich der Untergrundabsorption korrigierte Anteil der echten Atomabsorption bestimmt werden. Der Takt der Ein- und Ausschaltung des Elektromagneten 104 wird zu diesem Zweck auf die Signalauswertungs - Schaltung 40 (Fig.1) gegeben. Die speziell für die "Zeeman - Messung" erforderlichen Teile der Signalverarbeitungs - Schaltung sind zusammen mit dem Magneten 104, dem Ofen 114, dem Netzteil 124 und der Magnetsteuerung 126 auf einer Einschubplatte 128 montiert. Mit der Einschubbaugruppe ist das Atomabsorptions - Spektrometer als "Zeeman - Gerät" voll funktionsfähig.

Bei der Betriebsweise mit eingeschaltetem Strahlenteiler 46 ist der Elektromagnet 104 ausgeschaltet. Die Untergrundabsorption kann dann dadurch bestimmt werden, daß abwechselnd die Absorption der sehr schmalen Spektrallinie der ersten Lichtquelle 16 und die Absorption eines relativ zu der Spektrallinie breiten, durch den Monochromator 34 bestimmten Bandes von Kontinuumsstrahlung gemessen wird. Der Wechsel zwischen der ersten Lichtquelle 16 und der zweiten Lichtquelle 42 erfolgt mit einer Frequenz von mehr als 500 Hertz, nämlich 1000 Hertz. Die Arbeitsweise mit einer ein Kontinuum emittierenden zweiten Lichtquelle als Referenzlichtquelle gestattet es, relativ schnelle Änderungen der Untergrundabsorption zu erfassen, die bei der Ausnutzung des Zeeman- Effekts mittels des Elektromagneten 104 nicht erfaßt werden können. Der Elektromagnet 104 ist relativ träge, so daß der Frequenz des Wechsels zwischen Atomabsorptionsmessung und Untergrundmessung Grenzen gesetzt sind. Durch die Anwendung des longitudinalen Zeeman - Effektes ist kein Polarisator im Strahlengang erforderlich. Nach Abschaltung des Elektromagneten kann daher das Atomabsorptions - Spektrometer mit einer ein Kontinuum emittierenden zweiten Lichtquelle 42 arbeiten, ohne daß eine doppelte Lichtschwächung durch einen Polarisator und zusätzlich durch den Strahlenteiler 46 erfolgen würde.

Es kann daher mit der "Zeeman" - Einschubbaugruppe wahlweise auch bei ausgeschaltetem Elektromagneten 104 und mit einer Deuteriumlampe zur Bestimmung der Untergrundabsorption gearbeitet werden. Die Deuteriumlampe ist auf jeden Fall erforderlich für die Messung mit einem einfachen Ofen nach Fig.7 und 8.

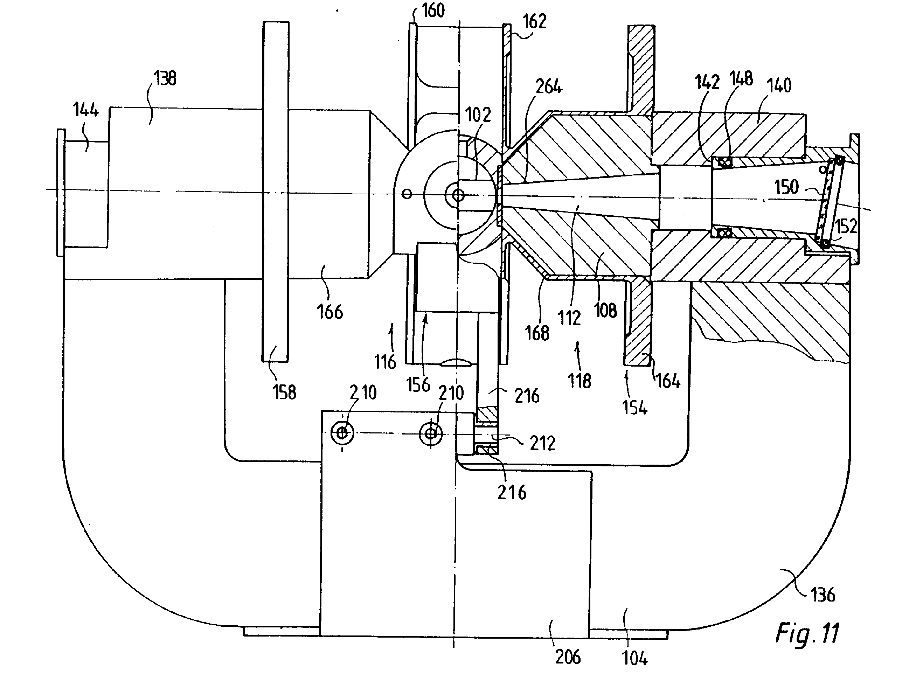

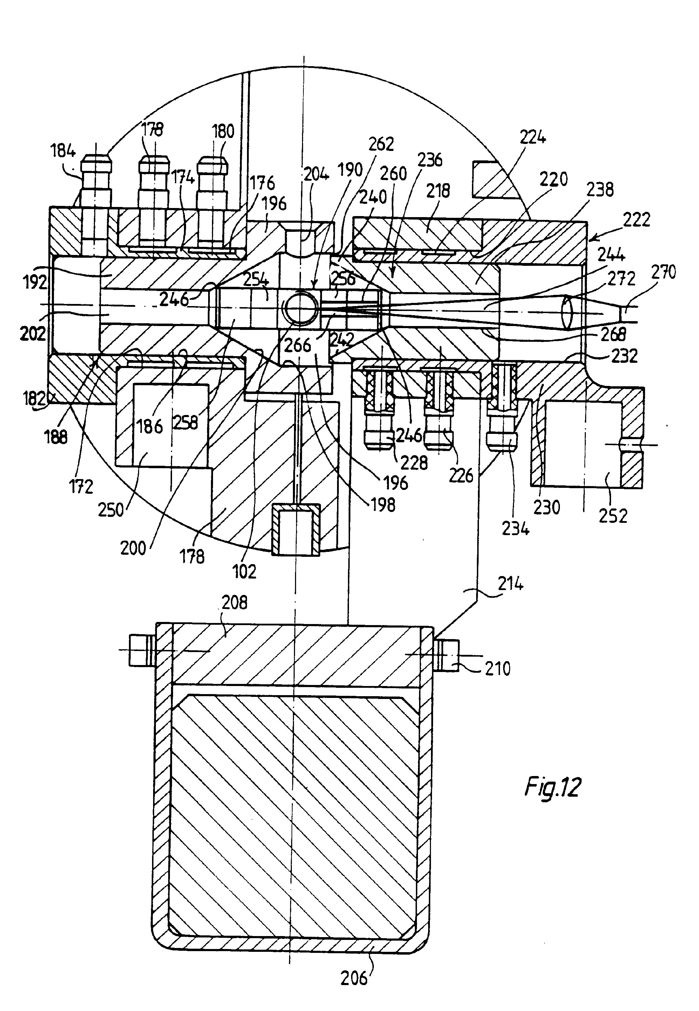

Der konstruktive Aufbau der Atomisierungsvorrichtung mit dem Elektromagneten 104 und dem Ofen ist in Fig.11 und 12 im einzelnen dargestellt.

Der Elektromagnet 104 weist einen u-förmigen magnetischen Rückschluß 136 aus lamelliertem Eisen und fluchtende Polschuhe 106,108 auf. Die Polschuhe 106 und 108 sind zylindrisch und verjüngen sich an den einander zugewandten Enden kegelstumpfförmig. Die Polschuhe 106 und 108 sitzen an ebenfalls fluchtenden Endstücken 138 bzw. 140, die an den Schenkeln des u-förmigen magnetischen Rückschlusses 136 angebracht sind und von diesen nach innen ragen. Durch die Polschuhe 106 und 108 und die Endstücke 138 und 140 erstrecken sich die fluchtenden Durchbrüche 110 bzw. 112. In den Polschuhen 106 und 108 haben die Durchbrüche 110 bzw. 112 konische Innenwandungen, um die Fokussierung des Meßlichtbündels 18 auf die Mitte des Ofenkörpers 102 zu ermöglichen. Im Bereich der Endstücke 138 und 140 bilden die Durchbrüche 110 bzw. 112 Schultern 142. In die Durchbrüche 110 und 112 sind Fensterfassungen 144 bzw 146 eingesetzt und durch O-Ringe 148 abgedichtet. In den Fensterfassungen 144 und 146 sitzen Fenster 150, die zur Vermeidung von Reflexen schräg in der Fensterfassung 144 bzw. 146 angeordnet sind und durch Dichtringe 152 gehalten werden.

Auf den Polschuhen 106 und 108 sitzt ein integraler Bauteil 154 aus einem unmagnetischen Werkstoff wie Aluminium. Dieser Bauteil 154 bildet einerseits die Spulenhalterungen 116 und 118, auf welche die Magnetspulen 120 bzw. 122 gewickelt sind, und andererseits einen Kontaktträger 156, welcher einen der Kontakte trägt, zwischen denen der Ofen gehalten wird. Die Magnetspulen 120 und 122 sind in Fig.11 und 12 der Deutlichkeit halber nicht eingezeichnet.

Die Spulenhalterungen 116 und 118 sind von spulenförmigen Teilen mit zwei Flanschen 158 und 160 bzw. 162 und 164 und Nabenteilen 166 bzw. 168 gebildet. Die Nabenteile 166 und 168 sind an die Form der Polschuhe 106 bzw. 108 angepaßt. Zwischen den einander zugewandten Flanschen 160 und 162 der beiden Spulenhalterungen 116 und 118 sitzt ein Block 170 mit einer Bohrung 172. In der Bohrung 172 sitzt ein Einsatz 174 mit mäanderförmigen Nuten 176 auf seiner Außenfläche, die zusammen mit der Innenfläche der Bohrung 172 einen Kühlkanal bilden. Dieser Kühlkanal ist mit einem Einlaß 178 und einem Auslaß 180 für eine Kühlflüssigkeit verbunden. Der Einsatz weist einen Kopfteil 182 auf, an welchem ein Schutzgaseinlaß 184 vorgesehen ist. Durch den Einsatz 174 erstreckt sich eine zentrale Axialbohrung 186, die an ihrem in Fig.12 linken Ende geschlossen ist. In dieser Axialbohrung 186 sitzt ein Kontakt 188, durch welchen ein Ofen 190 für die thermoelektrische Atomisierung auf der einen Seite gehalten ist und über welchen auch die Stromzufuhr zu dem Ofen 190 erfolgt.

Der Kontakt 188 weist einen Schaft 192 auf, der in der Axialbohrung 186 sitzt, und einen Kopf 194. Der Kopf 194 weist in seiner Stirnfläche eine Ausnehmung 196 auf. Diese Ausnehmung 196 ist angrenzend an die Stirnfläche zunächst in einem Abschnitt 198 zylindrisch und verengt sich dann konisch in einem Abschnitt 200. In dem Schaft 192 verläuft eine zentrale Axialbohrung 202, die auf dem Grund der Ausnehmung 196 mündet. In dem zylindrischen Abschnitt 198 ist in dem Kopf 194 oben in Fig.12 eine radiale Eingabeöffnung 204 gebildet, durch welche Probe in den Ofen 190 eingegeben werden kann.

Der magnetische Rückschluß 136 des Elektromagneten 104 ist von einem im Querschnitt u-förmigen Blechteil 206 umgeben, in welchem ein Lagerteil 208 durch Bolzen 210 gehalten ist. An einem Zapfen 212 des Lagerteils ist ein Schwenkarm 214 über eine Lagerbuchse 216 schwenkbar gelagert. An dem Schwenkarm 214 sitzt ein beweglicher Block 218. Der Block 218 weist ähnlich wie der Block 170 eine Bohrung 220 auf. In der Bohrung 220 sitzt ein Einsatz 222 ähnlich dem Einsatz 174. Der Einsatz 222 hat auf seiner Außenfläche mäanderförmige Nuten 224, die mit der Innenfläche der Bohrung 220 einen Kühlkanal bilden. Dieser Kühlkanal ist an seinen Enden mit einem Einlaßanschluß 226 und einem Auslaßanschluß 228 für Kühlflüssigkeit verbunden. Der Einsatz 222 hat einen Kopf 230. Eine zentrale Axialbohrung 232 erstreckt sich durch den Einsatz 222 und den Kopf 230. Die Axialbohrung 232 ist auf der in Fig.12 rechten Seite durch ein Fenster verschlossen. In die Axialbohrung 232 mündet ein Schutzgasanschluß 234. In der Axialbohrung 232 sitzt ein Kontakt 236. Der Kontakt 236 hat einen zylindrischen Schaft 238 und einen flachen Kopf 240. In der Stirnfläche des Kopfes 240 ist eine konische Vertiefung 242 gebildet. Die Vertiefung 242 entspricht ungefähr der Vertiefung 120. In dem Schaft 238 des Kontaktes 236 verläuft eine zentrale Axialbohrung 244, ähnlich der Bohrung 202.

In der Arbeitsstellung des Schwenkarmes 214, wie sie in Fig.12 dargestellt ist, wird der Ofen 190 mit konischen Kontaktflächen 246 und 248 zwischen den Kontakten 188 und 236 gehalten. Die Achsen der Kontakte 188 und 236 fluchten dann. Über die Blöcke 170 und 218, die Einsätze 174 und 202 und die Kontakte 188 und 236 wird auch der Strom auf den Ofen 190 geleitet. Zu diesem Zweck sind der Block 170 und der Einsatz 222 mit Steckanschlüssen 250 bzw. 252 für Hochstromkabel versehen.

Der Ofen 190 enthält den eigentlichen Ofenkörper 102, der am besten in Fig.11 erkennbar ist. Längs des Ofenkörpers 4210 verlaufen diametral gegenüberliegende Kontaktrippen 254 und 196, die in Fig.12 erkennbar sind. An die Kontaktrippen 254 und 256 schließen sich im wesentlichen zylindrische Kontaktstücke 258 und 260 an, die mit den konischen Kontaktflächen 246 und 248 zwischen den Kontakten 188 und 236 gehalten sind. Die Achsen der Kontaktstücke 258 und 260 liegen also fluchtend mit den Achsen der Kontakte 188 und 236 in der Papierebene von Fig.12 und senkrecht zu der mit dem Meßlichtbündel 18 fluchtenden Achse des Ofenkörpers 102. Senkrecht zu diesen beiden Achsen, also oben in Fig.11 und 12 ist in dem Ofenkörper 102 eine Eingabeöffnung vorgesehen, die mit der Eingabeöffnung 204 fluchtet und durch welche Probe in den Ofen 190 eingebracht werden kann.

Die Kontakte 188 und 236 bilden mit ihren Ausnehmungen 196 und 228 einen Hohlraum, der den Ofen 190 enthält. Die Kontakte 188 und 236 sind dabei nur durch einen relativ schmalen Trennspalt 262 voneinander getrennt. Durch eine in Fig. 11 und 12 nicht dargestellte pneumatische Schwenkvorrichtung kann der Schwenkarm 214 im Uhrzeigersinn in Fig. 12 verschwenkt werden. Das ist in Fig. 12 durch einen Pfeil angedeutet. Damit wird der Block 218 mit dem Einsatz 222 und dem Kontakt 236 zurückgeschwenkt und der Ofen 190 zugänglich. Auf diese Weise kann ein Austausch des Ofens 190 erfolgen. Über die Schutzgasanschlüsse 184 und 234 wird ein Schutzgas zugeführt. Dieses Schutzgas strömt über die Bohrung 186 bzw. 232 und die Axialbohrungen 202 bzw. 244 zu den Kontaktstücken 258 bzw. 260 des Ofens 190. Das Schutzgas wird dann über (nicht dargestellte) Kanäle im Ofen 190 verteilt. Die Kontakte 188 bzw. 236 sowie der Ofen 190 sind aus Graphit hergestellt. Das Schutzgas verhindert den Zutritt von Luftsauerstoff zu dem Ofen 190 beim Aufheizen und damit ein Verbrennen des Ofens 190.

Wie aus Fig.11 ersichtlich ist, sitzt zwischen dem Kontakt 188 und der Stirnfläche des Polschuhs 108 eine Abschirmscheibe 264 mit einem zentralen Durchbruch für das Meßlichtbündel 18. Die Abschirmscheibe 264 besteht aus pyrolytischem Kohlenstoff mit einer hohen Wärmeleitfähigkeit in der Ebene der Abschirmscheibe 264 und einer schlechten Wärmeleitfähigkeit senkrecht zu dieser Ebene.

Auf diese Weise wird der Polschuh 108 gegen die hohen Temperaturen des Ofens 190 und des Kontaktes 188 abgeschirmt.

Die Axialbohrungen 232 und 244 in dem Einsatz 222 und dem Kontakt 236 sowie ein Schutzgaskanal 266 in dem Kontaktstück 260 und der Kontaktleiste 256 dienen gleichzeitig zur Aufnahme eines Pyrometerstrahlenganges 268, in welchem von einem Strahlungsdetektor 270 mittels eines Abbildungssystems 272 ein Stück der Wandung des Ofenteils 102 beobachtet wird. Das Signal des Strahlungsdetektors 270 liefert ein Maß für die Temperatur des Ofenteils 102 und gestattet damit eine Regelung der Ofentemperatur.

Die beschriebene Konstruktion des Elektromagneten 104 und des Ofens 190 gestattet es, den Elektromagneten mit seinen Polflächen ziemlich dicht an den Ofen heranzubringen, so daß sich trotz des longitudinalen Magnetfeldes ein kleiner Luftspalt ergibt. Die Anordnung der Magnetspulen auf den Polschuhen vermindert das Streufeld. Die Form der Polschuhe bringt eine Verdichtung der Feldlinien im Bereich des Ofens, so daß dort eine hohe magnetische Feldstärke auftritt. Diese Maßnahmen wirken zusammen, um die für die Trennung der Spektrallinien durch den ZeemanEffekt erforderliche magnetische Feldstärke mit relativ geringer elektrischer Leistung und geringen Abmessungen der Bauteile zu erzielen. Dies begünstigt den Zusammenbau der Atomisierungsvorrichtung und der dafür spezifischen Bauteile zu einer Einschubbaugruppe.

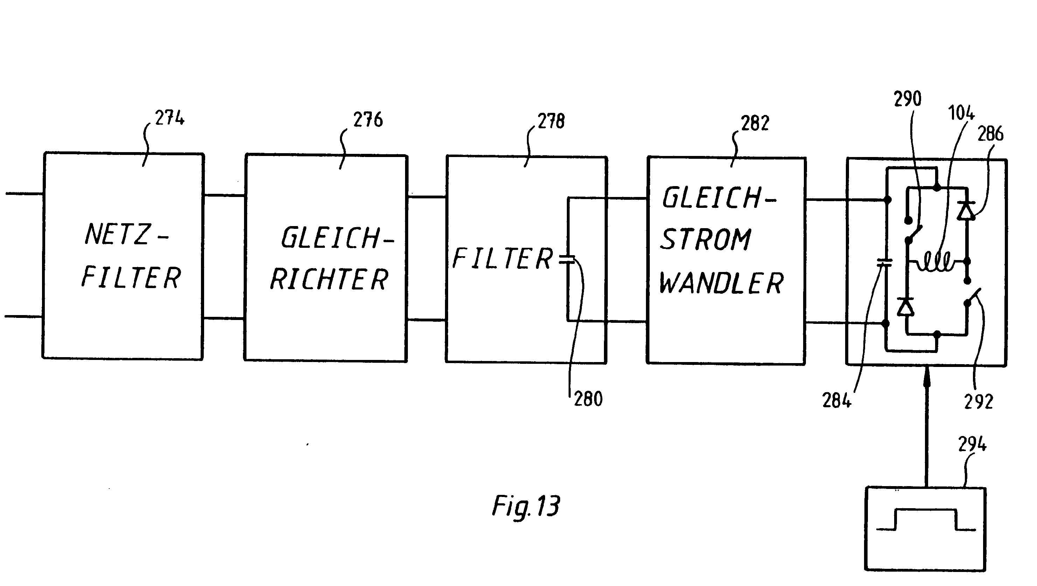

Fig.13 zeigt schematisch die Steuerung des Stromes durch den Elektromagneten 104. Die Netzspannung liegt über ein Netzfilter 274 an einer Gleichrichterbrücke 276 an. Die gleichgerichtete Netzspannung wird durch ein Filter 278 geglättet und lädt einen als Energiespeicher dienenden Kondensator 280 auf. Die Spannung des Kondensators 280 bildet die Eingangsgleichspannung eines Gleichstromwandlers 282. Der Gleichstromwandler 282 enthält einen Wechselrichter, der die Eingangsgleichspannung mit einer wesentlich über der Netzfequenz liegenden Frequenz zerhackt. Die so erhaltene Wechselspannung wird durch einen Transformator heruntertransformiert. Der dabei erhaltene Wechselstrom wird gleichgerichtet und lädt einen ebenfalls als Energiespeicher dienenden Kondensator 284 auf. Die höhere Frequenz gestattet es dabei, den Transformator kleiner auszulegen. Die so erhaltene Gleichspannung wird über Dioden 286,288 und gesteuerte Schalter 290,292 an den Kondensator 284 angeschaltet. Der Schalter 292 wird dabei von einem Taktgeber 294 gesteuert, der die Ein- und Ausschaltung des Elektromagneten 104 steuert. Der Schalter 290 regelt während der Einschaltzeit den Strom auf einen vorgegebenen Wert.

Bei dieser Anordnung ergeben sich günstige Meßzeiten. Die in dem Magnetfeld gespeicherte Energie wird nach Öffnen beider Schalter 290,292 über die Dioden 286,288 wieder in den Kondensator zurückgeführt: Der Induktionsstrom des Elektromagneten lädt den Kondensator auf. Es wird auf diese Weise der Leistungsverbrauch des Elektromagneten relativ gering gehalten. Dadurch und durch die höherfrequente Wandlung im Gleichstromwandler 282 werden die Bauteile kleiner als bei bekannten Geräten vergleichbarer Art. Das wiederum erleichtert ebenfalls die Unterbringung aller Bauteile auf der Einschubplatte 128.

Das Netzteil für den Magneten ist Gegenstand der gleichzeitig eingereichten Patentanmeldung "Einrichtung zur Erzeugung eines Magnetfeldes in einem Atomabsorptions-Spektrometer" (Akte D 2846, Anmeldung Nr. 89 904 543.9)

Fig.10 ist eine perspektivische Darstellung ähnlich Fig.6 und zeigt das Grundgerät 48 und die Einschubbaugruppe 100. Der Elektromagnet 104 und der (in Fig.10 nicht sichtbare) Ofen sind auf einer justierbaren Plattform 296 angeordnet. Die justierbare Plattform 296 ist wiederum auf einer festen Plattform 298 angeordnet, die auf Ständern 300 auf der Einschubplatte 128 abgestützt ist. Ein Transformator 302 des Netzteils 124 ist unter der Plattform 298 auf der Einschubplatte 128 angeordnet.

Neben dem Ofen und Elektromagneten 104 sind auf der Einschubplatte 128 die elektrischen und elektronischen Bauteile zur Versorgung und Steuerung des Ofens und des Elektromagneten 104 sowie die für diese Art von Messung spezifischen Signalverarbeitungsschaltungen angeordnet.

Beim Einsetzen der Einschubbaugruppe 100 in das Grundgerät 48 wird der Elektromagnet 104 und der Ofen so in den Probenraum 12 eingeschoben, daß das Meßlichtbündel 18 durch den die Bohrungen 110, 112 und den Ofenkörper 114 hindurchtritt. Die übrigen Bauteile werden von dem Hohlraum 68 aufgenommen.

## Patentansprüche

1. Atomabsorptions - Spektrometer enthaltend
   (a) eine Atomisierungsvorrichtung (74,90, 190) zur Atomisierung einer zu untersuchenden Probe, derart, daß die Atome der in der Probe enthaltenen Elemente in einem Atomisierungsbereich in atomarem Zustand vorliegen,
   (b) eine linienemittierende Lichtquelle (16),
   (c) ein optisches System (22,28..) zur Erzeugung eines von der linienemittierenden Lichtquelle (16) ausgehenden, den Atomisierungsbereich durchsetzenden Meßlichtbündels (18),
   (d) und einen photoelektrischen Detektor (38), auf welchen das Meßlichtbündel (18) von dem optischen System (22,28,..34) nach Durchtritt durch den Atomisierungsbereich geleitet wird, wobei

(e) die Lichtquelle (16), das optische System (22,28..34) und der photoelektrische Detektor (38) in einem Gehäuse (10) angeordnet sind, welches einen nach vorn hin offenen Probenraum (12) bildet, der von dem Meßlichtbündel (18) durchsetzt wird, und in welchen wahlweise unterschiedliche Atomisierungsvorrichtungen einsetzbar sind

**dadurch gekennzeichnet, daß**

(f) das Atomabsorptionsgerät ein Grundgerät umfaßt, dessen Gehäuse (10) eine Grundplatte (52) und im Abstand oberhalb dieser Grundplatte (52) eine Trägerplatte (54) aufweist,

(g) auf der Trägerplatte (54) die Lichtquelle (16), das optische System (20,22,28,30,34) und der photoelektrische Detektor (38) montiert sind,

(h) die Trägerplatte (54) an der Vorderseite einen Ausschnitt (56) aufweist,

(i) das Gehäuse (10) im Bereich des Ausschnitts (56) den nach vorn offenen Probenraum (12) bildet,

(j) an den Probenraum (12) sich in dem Gehäuse (10) unterhalb der Trägerplatte (54) ein Hohlraum (68) anschließt,

(k) auf der Trägerplatte (54) beiderseits des Ausschnitts (56) optische Glieder (22,28) angeordnet sind, durch welche das Meßlichtbündel (18) durch den Probenraum (12) hindurchleitbar ist,

(l) eine von dem Grundgerät getrennte Einschubbaugruppe mit einer Einschubplatte (72) vorgesehen ist, welche genau eine Atomisierungsvorrichtung (70;90;102) und für den Betrieb und/oder die Signalverarbeitung dieser Atomisierungsvorrichtung spezifische Bauteile (84; 96;104,124126) trägt und welche in dem Probenraum (12) und dem Hohlraum (68) in definierter Lage austauschbar so gehaltert ist, daß die Atomisierungsvorrichtung (70;90;102) richtig zu dem Meßlichtbündel (18) ausgerichtet ist, wobei die in der Einschubbaugruppe enthaltenen Bauteile zusammen mit den Bauteilen des Grundgerätes ein voll funktionsfähiges Atomabsorptions-Spektrometer ergeben.

2. Atomabsorptions - Spektrometer nach Anspruch 1, **dadurchgekennzeichnet, daß** die Atomisierungsvorrichtung einen Brenner (70) zum Atomisieren der Probe in einer Flamme enthält, der mit einer Vorrichtung zur Steuerung oder Regelung der Zufuhr von Brenngas und Oxidans zum Brenner (Gasbox) zu einer Einschubbaugruppe vereinigt ist.

3. Atomabsorptions - Spektrometer nach Anspruch 2, **dadurch gekennzeichnet, daß** die Einschubbaugruppe für den Brenner (70) ein vorn und oben offenes Schutzgehäuse (74) aufweist, welches den Brenner (70) umgibt und in den gegenüberliegenden Seitenwänden oberhalb des Brenners (70) Durchtrittsöffnungen für das Meßlichtbündel (18) aufweist.

4. Atomabsorptions - Spektrometer nach Anspruch 3, **dadurch gekennzeichnet, daß** die Gasbox auf der seitlich gegenüber dem Schutzgehäuse (74) vorstehenden Einschubplatte sitzt und mit der Einschubplatte in den Hohlraum (68) des Gehäuses (10) einschiebbar ist.

5. Atomabsorptions - Spektrometer nach Anspruch 1, **dadurch gekennzeichnet, daß** die Atomisierungsvorrichtung einen Ofen (90,190) für die elektrothermische Atomisierung aufweist und das Netzteil (96,124) für diesen Ofen (90,190) einen Teil der Einschubbaugruppe (86,100) bildet.

6. Atomabsorptions - Spektrometer nach Anspruch 5, **dadurch gekennzeichnet, daß** die Atomisierungsvorrichtung einen Elektromagneten (104) enthält, durch welchen am Ort des Ofens (190) ein starkes Magnetfeld erzeugbar ist, das durch den ZeemanEffekt eine Verschiebung der Absorptionslinien der Probenatome zum Zwecke der Messung und Kompensation der Untergrundabsorption bewirkt, wobei der Elektromagnet (104) einen Teil der Einschubbaugruppe (100) bildet.

7. Atomabsorptions - Spektrometer nach Anspruch 6, **dadurch gekennzeichnet, daß** die Einschubbaugruppe (100) das Netzteil zur Versorgung und Steuerung des Elektromagneten (104) enthält.

**Claims**

1. Atomic absorption spectrometer containing

(a) an atomizing device (74,90,190) for atomizing a sample to be investigated such that the atoms of the elements contained in the sample are present in the atomic state in an atomizing area,

(b) a line emitting light source (16),

(c) an optical system (22,28..) for generating a measuring light beam (18) originating from the line emitting light source (16) and passing through the atomizing area,

(d) and a photoelectric detector (38) to which the measuring light beam (18) is passed by the optical system (22, 28,..34) after passage through the atomizing area, whereby

(e) the light source (16), the optical system (22,28,..34) and the photoelectric detector (38) are arranged in a housing (10) which defines a sample space (12) which is open to the front, which is passed through by the measuring light beam (18) and into which are selectively insertable different atomizing devices

**characterised in that**

(f) the atomic absorption instrument encompasses a basic instrument having a housing (10) which comprises a base plate (52) and a carrier plate (54) disposed at a spacing above the base plate (52),

(g) the light source (16), the optical system (20,22,28,30,34) and the photoelectric detector are mounted at the carrier plate (54),

(h) the carrier plate (54) has a cutout (56) on the front side,

(i) the housing (10) defines, in the region of the cutout (56), the sample space (12) which is open to the front,

(j) the sample space (12) is adjoined by a cavity (68) in the housing (10) below the carrier plate (54),

(k) arranged at the carrier plate (54) on both sides of the cutout (56) are optical members (22,28) by means of which the measuring light beam (18) can be passed through the sample space (12),

(l) there is provided a plug-in unit which is separate from the basic instrument and includes an insert plate (72) which precisely supports an atomizing device (70;90;102) and specific components (84;96; 104,124126) for the operation and/or signal processing of this atomizing device and which is exchangeably retained in defined position in the sample space (12) and the cavity (68) in a manner such the atomizing device (70;90;102) is properly aligned to the measuring light beam (18), whereby the components included in the plug-in unit conjointly with the components of the basic instrument result in a fully operable atomic absorption spectrometer.

2. Atomic absorption spectrometer according to claim 1, **characterised in that** the atomizing device contains a burner (70) for atomizing the sample in a flame, the burner being combined with means for controlling or regulating the supply of fuel gas and oxidant (gas box) to form a plug-in unit.

3. Atomic absorption spectrometer according to claim 2, **characterised in that** the plug-in unit for the burner (70) comprises a protective housing (74) which is open at the front and at the top, which surrounds the burner (70) and which comprises throughpass openings for the measuring light beam (18) in the mutually oppositely disposed side walls above the burner (70).

4. Atomic absorption spectrometer according to claim 3, **characterised in that** the gas box is seated at the insert plate which laterally protrudes from the protective housing (74), the gas box being insertable into the cavity (68) of the housing (10) conjointly with the insert plate.

5. Atomic absorption spectrometer according to claim 1, **characterised in that** the atomizing device comprises a furnace (90,190) for electrothermal atomization and the power supply (96,124) for this furnace (90,190) forms a part of the plug-in unit (86,100).

6. Atomic absorption spectrometer according to claim 5, **characterised in that** the atomizing device contains an electromagnet (104) by means of which a strong magnetic field can be generated at the place of the furnace (190), the strong magnetic field causing a shift of the absorption lines of the sample atoms due to the Zeeman effect for the purpose of measuring and compensating for background absorption, whereby the electromagnet (104) forms part of the plug-in unit (100).

7. Atomic absorption spectrometer according to claim 6, **characterised in that** the plug-in unit (100) contains the power supply for energising and controlling the electromagnet (104).

## Revendications

1. Spectromètre d'absorption atomique, comprenant

(a) un dispositif d'atomisation (74,90,190) destiné à atomiser un échantillon à examiner de sorte que les atomes des éléments contenus dans l'échantillon sont présents en état atomique dans une zone d'atomisation,

(b) une source lumineuse (16) émettant des lignes,

(c) un système optique (22,28..) destiné à engendrer un faisceau lumineux de mesure (18) partant de la source lumineuse émettant des lignes et passant par la zone d'atomisation,

(d) et un détecteur photoélectrique (38) auquel est guidé le faisceau lumineux de mesure (18) du système optique (22,28...34) après avoir passé la zone d'atomisation, dans lequel

(e) la source lumineuse (16), le système optique (22,28..34) et le détecteur photoélectrique (38) sont disposés dans un boîtier (10) formant un espace d'échantillon (12) ouvert vers l'avant et par lequel passe le faisceau lumineux (18) et dans lequel des dispositifs d'atomisation différents sont facultativement introductibles,

**caractérisé par le fait que**

(f) le dispositif d'absorption atomique comprend un dispositif de base dont le boîtier (10) présente une plaque de base (52) et une plaque de support (54) au dessus de la plaque de base (52) et espacé de celle-ci,

(g) la source lumineuse (16), le système optique (20,22,28,30,34) et le détecteur photoélectrique (38) sont montés sur la plaque de support (54),

(h) la plaque de support (54) présente sur la face frontale une section (56),

(i) le boîtier (10) forme l'espace d'échantillon (12) ouvert vers l'avant dans le domaine de la section (56),

(j) une cavité (68) fait suite à l'espace d'échantillon (12) dans le boîtier (10) au dessous de la plaque de support (54),

(k) des membres optiques (22,28) par lesquels le faisceau lumineux de mesure (18) peut être guidé à travers l'espace d'échantillon (12), sont disposés sur la plaque de support (54) sur les deux côtés de la section (56),

(l) on a prévu un ensemble de dispositifs insérables qui est séparé de l'appareil de base et qui présente une plaque insérable (72) et porte exactement un dispositif d'atomisation (70;90;102) et des composants spécifiques (84;96;104,124,126) pour l'opération et/ou le traitement de signal de ce dispositif d'atomisation, et qui est fixé de manière échangable dans l'espace d'échantillon (12) et la cavité (68) dans une position définie de sorte que le dispositif d'atomisation (70;90;102) est correctement aligné par rapport au faisceau lumineux (18), les composants compris dans l'ensemble de dispositifs insérables donnant conjointement avec les composants de l'appareil de base un spectromètre d'absorption atomique complètement fonctionnable.

2. Spectromètre d'absorption atomique selon la revendication 1, **caractérisé par le fait que** le dispositif d'atomisation comprend un brûleur (70) destiné à atomiser l'échantillon dans une flamme et uni avec un dispositif destiné à commander ou régler l'alimentation de gaz combustible et d'oxydans au brûleur (boîte de gaz) de sorte à former un ensemble de dispositifs insérables.

3. Spectromètre d'absorption atomique selon la revendication 2, **caractérisé par le fait que** l'ensemble de dispositifs insérables présente pour le brûleur (70) un boîtier de protection (74) ouvert en avant et en haut et entourant le brûleur (70) et présentant des ouvertures de passage pour le faisceau lumineux (18) dans les parois latérales opposées au-dessus du brûleur (70).

4. Spectromètre d'absorption atomique selon la revendication 3, **caractérisé par le fait que** la boîte de gaz est située sur la plaque insérable saillant latéralement par rapport au boîtier de protection (74) et insérable avec la plaque insérable dans la cavité (68) du boîtier (10).

5. Spectromètre d'absorption atomique selon la revendication 1, **caractérisé par le fait que** le dispositif d'atomisation présente un four (90,190) pour l'atomisation électrothermique, et le bloc d'alimentation (96,124) pour ce four (90,190) forme une partie de l'ensemble de dispositifs insérables.

6. Spectromètre d'absorption atomique selon la revendication 5, **caractérisé par le fait que** le dispositif d'atomisation comprend un électro-aimant (104) qui peut engendrer à l'endroit du four (190) un fort champ magnétique provoquant par l'effet Zeeman un déplacement des lignes d'absorption des atomes d'échantillon à des fins de mesure et de compensation d'absorption de fond, l'électro-aimant (104) formant une partie de l'ensemble de dispositifs insérables (110).

7. Spectromètre d'absorption atomique selon la revendication 6, **caractérisé par le fait que** l'ensemble de dispositifs insérables comprend le bloc d'alimentation destiné à l'alimentation et la commande de l'électro-aimant (104).

Fig.1

Fig.9

*Fig.2*

*Fig.4*

*Fig.5*

Fig. 3

Fig.6

Fig.7

Fig.8

Fig.10

Fig. 11

EP 0 365 624 B1

Fig.12

Fig.13